Europäisches Patentamt

European Patent Office

Office européen des brevets

(19)

(11) Publication number: **0 132 353 B1**

(12) # EUROPEAN PATENT SPECIFICATION

(45) Date of publication of patent specification: **12.02.92**　　(51) Int. Cl.⁵: **G05D 3/20**, **B41J 1/30**, **B41J 21/08**

(21) Application number: **84304817.4**

(22) Date of filing: **13.07.84**

(54) **Servomotor speed control in a positioning device.**

(30) Priority: **15.07.83 JP 129955/83**

(43) Date of publication of application:
**30.01.85 Bulletin  85/05**

(45) Publication of the grant of the patent:
**12.02.92 Bulletin  92/07**

(84) Designated Contracting States:
**DE GB IT**

(56) References cited:
**EP-A- 0 035 258**
**DE-A- 2 629 096**
**DE-A- 2 813 855**

(73) Proprietor: **SHARP KABUSHIKI KAISHA**
**22-22 Nagaike-cho Abeno-ku**
**Osaka 545(JP)**

(72) Inventor: **Tamagaki, Akira**
**4-14-3 Nagamodai Kamo-cho**
**Soraku-gun Kyoto-fu(JP)**

(74) Representative: **Wright, Peter David John et al**
**R.G.C. Jenkins & Co. 26 Caxton Street**
**London SW1H 0RJ(GB)**

Rank Xerox (UK) Business Services

EP 0 132 353 B1

## Description

The present invention relates to a servomotor speed control device for use in a positioning system. The device may for example, be included in a type wheel positioning system in a printer, a carriage positioning system in a printer, or a machine tool.

In a positioning device, a servomotor is normally held in a halt state at a predetermined position. When a positioning command is applied to the positioning device, the servomotor is accelerated to the maximum speed, and rotates at the maximum constant speed toward a target point. When the servomotor position becomes close to the target point, the servomotor is decelerated so that the motor rotation is stopped precisely at the target point.

That is, the servomotor speed must be controlled with reference to the distance between the current motor position and the target point. A preferred motor speed V is determined in accordance with the following formula.

$$V = a\sqrt{S}$$

where, a is a constant determined by the motor characteristics and the load connected to the servomotor, and S is the distance between the current motor position and the target point.

In a known system, an arithmetic calculation circuit is employed in a positioning device, which calculates a preferred motor speed upon every detection of the current motor position. The calculation can not track the high speed rotation because of the complicated radical operation.

In order to accurately track the high speed rotation, another positioning device has been proposed wherein a ROM table is provided in a control system for determining a preferred motor speed. In this system, the ROM table stores a preferred motor speed for each of the distance values between the current motor position and the target point. The distance is scaled to correspond to the unit of the position detection output developed from the position detection device. Therefore, a very large capacity is required for the ROM table.

In another known system disclosed in US Patent 4,350,941, for positioning a slide along a path in accordance with a predetermined slide velocity/position relationship, a memory stores paired values of slide velocity and slide position. These paired values establish for each of a number of successive target slide positions along the path a new slide velocity to be adopted at that position and to be used until the next target slide position is reached. Each time a target position is reached the next pair of values of slide velocity and position is read out from the memory. This known system can only operate cyclically from a given fixed starting position; it is incapable of establishing an appropriate initial velocity in accordance with a variable starting position.

The present invention seeks to provide an improved servomotor control device which can operate a servomotor to precisely position an object at a desired target position, and can perform an initial speed setting operation according to the initial position of the object.

According to the present invention there is provided a servomotor control device which includes means for repeatedly providing a current distance value indicative of the distance between the current position of an object and a target position thereof, and which is operable to control a motor speed value used to control the speed of a servomotor in accordance with the current distance value so as to move the object toward the target position, the device including a memory for storing a data table comprising data indicating for each of a plurality of different speed values the minimum distance value of a range of distance values for which the speed value is appropriate, the device being operable during movement of the object by the servomotor towards said target position to derive from said data table a said minimum distance value associated with a said speed value and to compare the current distance value with said minimum distance value in order to determine whether the speed value should be reduced, characterised in that there is provided control means for addressing said data table in accordance with the current motor speed value to derive said minimum distance value every time a said current distance value is provided and to cause said comparison of the current distance value with the minimum distance value to be effected once each time the latter is so derived, and driver means operable during driving of the servomotor to change the servomotor speed in accordance with reductions in the motor speed value resulting from the repeated comparisons performed by said control means, said control means being operable, prior to actuation of the servomotor for moving the object from an initial position, to cause the device to execute an initial speed setting operation during which the servomotor is maintained stationary and in which said current speed value is incremented in accordance with successive comparisons between the initial distance value associated with said initial position and the derived minimum distance values corresponding to successively greater speed values, until the current speed value reaches a suitable start speed value, said control means being then operable to actuate the servomotor and cause it to accelerate to a speed corresponding to said start speed value.

The present invention will be better understood from the detailed description given hereinbelow and the accompanying drawings which are given by way of illustration only, and thus are not limitative of the present invention and wherein:

Figure 1 is a graph showing an example of a servomotor speed variation in a positioning device;

Figure 2 is a graph showing a speed instruction for conducting the motor rotation of Figure 1;

Figure 3 is a chart showing a speed determining table of the prior art;

Figure 4 is a graph showing a decelerating operation of the servomotor in a positioning device;

Figure 5 is a chart showing an embodiment of a speed determining table included in a servomotor control device of the present invention;

Figure 6 is a block diagram of an embodiment of a servomotor control device of the present invention;

Figure 7 is a flow chart for explaining an accelerating operation conducted by the servomotor control device of Figure 6; and

Figure 8 is a flow chart for explaining a decelerating operation conducted by the servomotor control device of Figure 6.

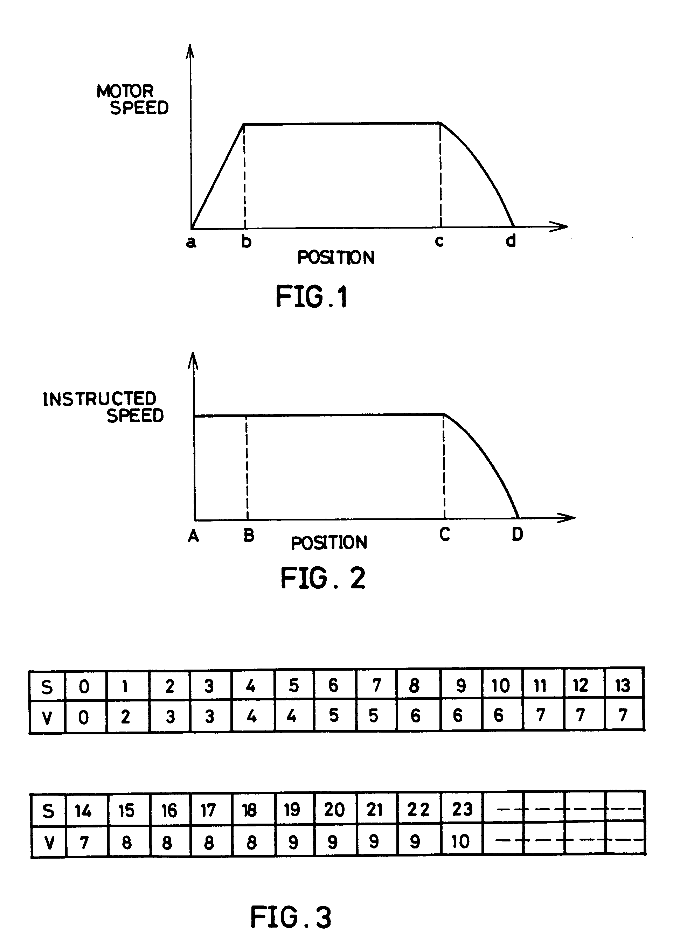

Generally, the servomotor must perform the rotation in a manner as shown in FIGURE 1 so as to precisely stop at a target point. More specifically, the servomotor is accelerated from a halt state a and reaches the maximum constant speed at a point b. The maximum constant speed is maintained till the servomotor reaches a point c close to a target point d. When the servomotor reaches the point c, the servomotor is decelerated so as to precisely stop at the target point d. During the decelerating operation, a detailed speed control is required.

In order to rotate the servomotor in a manner as shown in FIGURE 1, a speed instruction is conducted in a manner as shown in FIGURE 2. That is, the maximum speed is instructed from the beginning of the motor rotation till the servomotor reaches the point c. When the maximum speed instruction is applied to the servomotor held in the halt state a (point A in FIGURE 2), the servomotor is accelerated in accordance with the motor torque and the load connected to the servomotor. The servomotor reaches the maximum speed at a point B (corresponding to the point b in FIGURE 1), and the maximum speed instruction is maintained till the servomotor reaches the point c (point C in FIGURE 2). Then, the speed instruction is gradually reduced toward the target point D. The actual motor speed is gradually reduced in accordance with the reduction of the instructed speed.

Normally, the decelerating operation is conducted with reference to the distance between the current motor position and the target point. The motor speed V is preferably determined in accordance with the following equation.

$$V = a \sqrt{S}$$

where a is a constant determined by the motor characteristic and the load value, and S is the distance from the current motor position to the target point.

If the arithmetic calculation is conducted in the system, the system can not track a high speed rotation of the servomotor because of the complicated radical operation. To ensure an accurate control even at a high speed rotation, a ROM table control has been proposed, wherein a desired speed is read out from the ROM table upon every determination of the current motor position.

FIGURE 3 shows a conventional ROM table wherein a desired motor speed is determined in accordance with the following equation.

$$V = 2 \sqrt{S}$$

If the distance between the current motor position and the target point is "23", the instructed speed is "10" (maximum). When an output signal is obtained from the rotary encoder associated with the servomotor, the distance is reduced by one, and the desired speed "9" is read out from the memory area corresponding to the distance "22".

The ROM table method ensures a high speed operation because a complicated calculation is not required. In the ROM table of FIGURE 3, the memory areas must be provided for each of the distances between the points C and D ("23" to "0"). Therefore, the conventional ROM table must have a large capacity. More specifically, if the desired speed is shown by one byte digital data, the ROM table must have the memory capacity of several hundreds bytes.

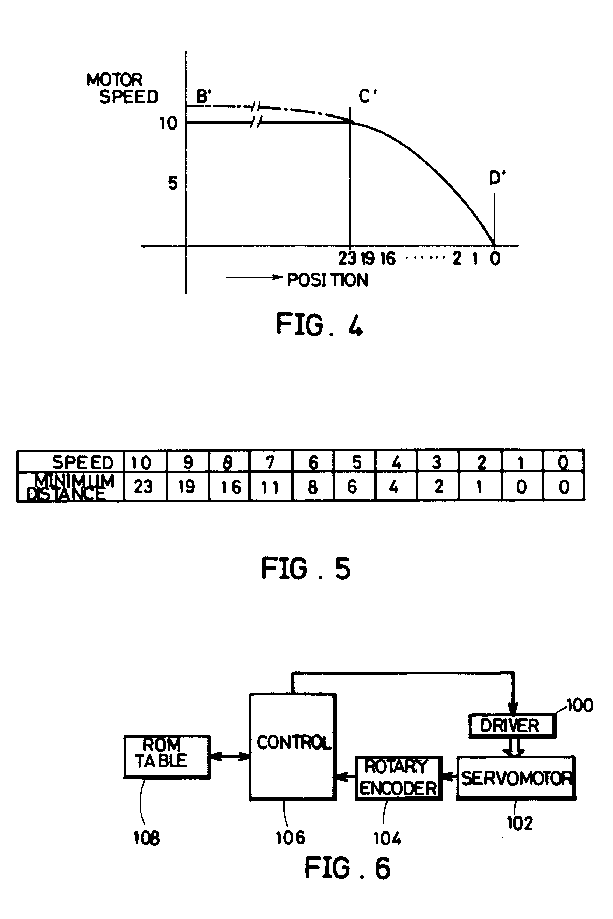

As already discussed above, the desired motor speed should be determined in accordance with the equation ( $V = a\sqrt{S}$ ). Even when the speed is instructed in accordance with the above equation, the maximum motor speed is limited as shown by the solid line in FIGURE 4 due to the motor torque and the load connected to the motor. This means that it is practical to limit the speed instruction to "10" before the servomotor reaches the point C (C' in FIGURE 4, the distance is "23").

FIGURE 5 shows an embodiment of a ROM table included in the speed control system of the present invention. The memory areas are provided by the number corresponding to the different speed values, that is eleven. The table of FIGURE 5 is based on the equation ( V = $2\sqrt{S}$ ). Each memory area stores the minimum distance where the motor speed should be controlled to the corresponding value. More specifically, when the distance from the current motor position to the target point is greater than or equal to "23", the motor speed should be "10". When the distance becomes less than "23" but is greater than or equal to "19", the motor speed should be "9".

FIGURE 6 shows an embodiment of a positioning device having the ROM table of FIGURE 5. A servomotor driver circuit 100 is connected to a servomotor 102 to control the motor speed and to perform the positioning operation. A rotary encoder 104 is associated with the servomotor 102, which develops a position indicating signal in response to the rotation of the servomotor 102. A main control circuit 106 receives the position indicating signal from the rotary encoder 104 and reads out the instruction speed from a ROM speed table 108, thereby developing a speed instruction signal toward the servomotor driver circuit 100 in accordance with the current motor position.

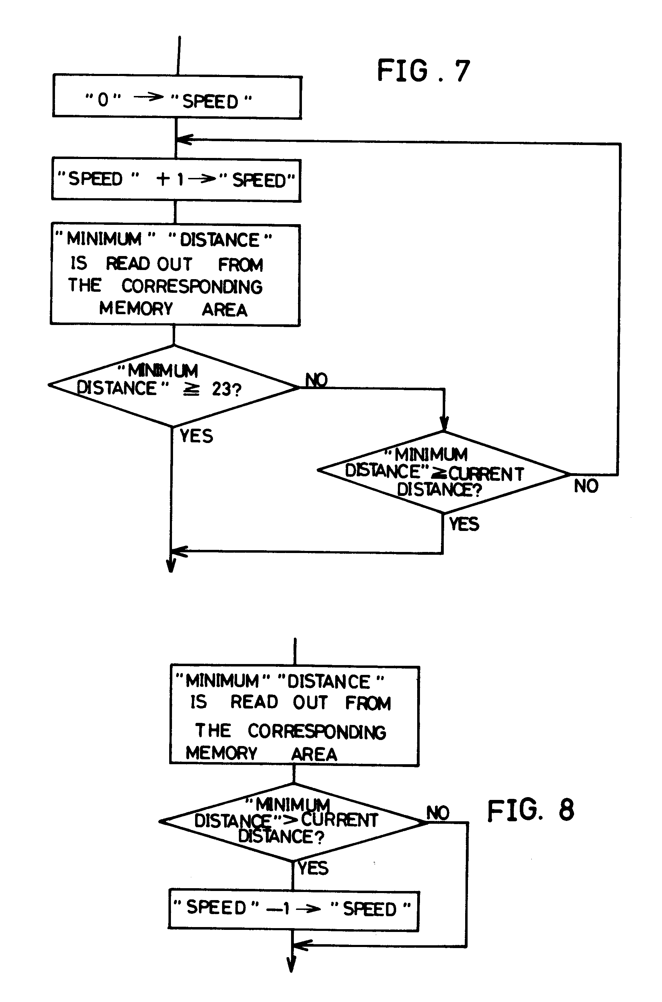

First, when the positioning command is applied to the system, an initial speed setting operation is performed in which the servomotor is accelerated in accordance with the flow of Figure 7. More specifically, the speed value "0" is first introduced into the main control 106 which functions to add "1" to the speed value "0", and to read out the corresponding minimum distance "0" from the corresponding memory area of the ROM speed table 108. The thus read out minimum distance "0" is compared with the actual distance between the current motor position and the target point. Since the actual distance is longer than the minimum distance stored in the ROM speed table, the speed value is increased to "2". Then, the ROM table is addressed to read out the minimum distance "1" corresponding to the speed value "2". Then, a determination is carried out whether the actual distance is longer than the minimum distance "1" now read out from the ROM speed table. In this way, the speed value is increased till the minimum distance becomes longer than the actual distance read out from the ROM speed table, or till the minimum distance read out from the ROM speed table becomes "23". That is, in the normal case, the initial speed value is set at the maximum value "10". While the determination of Figure 7 is conducted, the servomotor is held stationary. Thereafter, the start signal with the speed of "10" is normally applied to the servomotor driver circuit 100 to accelerate the servomotor 102.

When the servomotor rotates, a speed control is conducted in accordance with a determination of the flow shown in Figure 8. The determination of Figure 8 is conducted upon every development of the position indicating signal from the rotary encoder 104. As already discussed above, the maximum speed "10" is maintained before the servomotor reaches the point C' which is separated from the target point D' by the distance "23". The unit of the distance corresponds to the interval of the development of the position indicating signal from the rotary encoder 104.

Now assume that the current distance is "23", and the servomotor speed is "10". Under these conditions when the detection output is applied from the rotary encoder 104 to the main control 106, the current distance is reduced by one to "22". The thus obtained current distance "22" is compared with the minimum distance "23" stored in the memory area corresponding to the motor speed "10" and derived by addressing the ROM speed table according to the speed value "10". Since the current distance "22" is shorter than the minimum distance "23" suited for the speed "10", the speed is reduced by one to "9". The servomotor is decelerated to the speed value "9". When the next detection output is applied from the rotary encoder 104 to the main control circuit 106, the current distance is reduced to "21". The current distance "21" is compared with the minimum distance "19" derived from the ROM speed table by addressing it according to the speed value "9". Since the current distance "21" is longer than the minimum distance "19", the instruction speed "9" is not changed. In this way, the servomotor rotation is decelerated with reference to the ROM speed table 108. The ROM speed table 108 is required to have eleven memory areas, the ROM capacity is several tens bytes.

The invention being thus described, it will be obvious that the same may be varied in many ways. Such variations are not to be regarded as a departure from the scope of the invention.

**Claims**

1.  A servomotor control device which includes means (104) for repeatedly providing a current distance value indicative of the distance (S) between the current position of an object and a target position (D) thereof, and which is operable to control a motor speed value (V) used to control the speed of a servomotor (102) in accordance with the current distance value so as to move the object toward the target position, the device including a memory for storing a data table (108) comprising data indicating for each of a plurality of different speed values the minimum distance value of a range of distance values for which the speed value is appropriate, the device being operable during movement of the object by the servomotor towards said target position to derive from said data table a said minimum distance value associated with a said speed value and to compare the current distance value with said minimum distance value in order to determine whether the speed value should be reduced, characterised in that there is provided control means (106) for addressing said data table in accordance with the current motor speed value to derive said minimum distance value every time a said current distance value is provided and to cause said comparison of the current distance value with the minimum distance value to be effected once each time the latter is so derived, and driver means (100) operable during driving of the servomotor (102) to change the servomotor speed in accordance with reductions in the motor speed value resulting from the repeated comparisons performed by said control means (106), said control means (106) being operable, prior to actuation of the servomotor for moving the object from an initial position (A), to cause the device to execute an initial speed setting operation during which the servomotor is maintained stationary and in which said current speed value is incremented in accordance with successive comparisons between the initial distance value associated with said initial position and the derived minimum distance values corresponding to successively greater speed values, until the current speed value reaches a suitable start speed value, said control means (106) being then operable to actuate the servomotor and cause it to accelerate to a speed corresponding to said start speed value.

2.  A servomotor control device according to claim 1 characterised in that said control means is operable so that during said initial speed setting operation said start speed value is reached by incrementing the current speed value until it reaches either a level at which the minimum distance value corresponding to the current speed value has reached a predetermined threshold, or a lower level at which the corresponding minimum distance value exceeds the current distance value.

3.  A servomotor control device according to any preceding claim, characterised in that said current position is detected by a detection means including a rotary encoder associated with said servomotor.

4.  A servomotor control device according to any preceding claim, wherein said table stores minimum distance values for each of eleven different discrete speed values.

5.  A printer having a servomotor control device as claimed in any preceding claim, for controlling the movement of a print head of the printer.

**Revendications**

1.  Dispositif de régulation de servomoteur qui comprend des moyens (104) servant à fournir de façon répétée une valeur de distance instantanée représentative de la distance (S) entre la position instantanée d'un objet et une position cible (D) de celui-ci, et qui est apte à réguler une valeur de vitesse de moteur (V) utilisée pour réguler la vitesse d'un servomoteur (102) en fonction de la valeur de distance instantanée, de manière à déplacer l'objet vers la position cible, le dispositif comprenant une mémoire servant à emmagasiner une table de données (108) comportant des données représentatives, pour chacune des valeurs d'une série de valeurs de vitesse différentes, de la valeur de distance minimale d'une gamme de valeurs de distance pour laquelle la valeur de vitesse est appropriée, le dispositif étant apte, pendant le déplacement de l'objet par le servomoteur vers ladite position cible, à déduire de ladite table de données une desdites valeurs de distance minimales, associée à une desdites valeurs de vitesse, et à comparer la valeur de distance instantanée à ladite valeur de distance minimale afin de déterminer si la valeur de vitesse doit être réduite, caractérisé en ce qu'il est prévu des moyens de régulation (106) servant à adresser ladite table de données en fonction de la valeur de vitesse de moteur instantanée pour obtenir ladite valeur de distance minimale chaque fois que l'une desdites valeurs de distance instantanée est fournie et pour assurer que la comparaison entre la valeur de distance instantanée et la valeur de distance minimale soit effectuée une fois chaque fois que cette dernière est ainsi obtenue, et des moyens de pilotage (100) aptes, pendant l'entraînement du servomoteur (102), à modifier la vitesse du servomoteur en fonction de réductions de la valeur de vitesse du moteur résultant des comparaisons répétées réalisées par lesdits moyens de régulation (106), lesdits moyens de régulation (106) étant aptes, avant la mise en action du servomoteur en vue du déplacement de l'objet à partir d'une position initiale (A), à faire exécuter par le dispositif une opération de réglage de vitesse initiale pendant laquelle le servomoteur est maintenu à l'arrêt et lors de laquelle ladite valeur de vitesse instantanée est incrémentée conformément à des comparaisons successives entre la valeur de distance initiale associée à ladite position initiale et les valeurs de distance minimales obtenues correspondant à des valeurs de vitesse successivement plus élevées, jusqu'à ce que la valeur de vitesse instantanée atteigne une valeur de vitesse de démarrage appropriée, lesdits moyens de régulation (106) étant alors aptes à mettre en action le servomoteur et à le faire accélérer jusqu'à une vitesse correspondant à ladite valeur de vitesse de démarrage.

2. Dispositif de régulation de servomoteur selon la revendication 1, caractérisé en ce que lesdits moyens de régulation sont aptes à fonctionner de manière à ce que, pendant ladite opération de réglage de vitesse initiale, ladite valeur de vitesse de démarrage soit atteinte en incrémentant la valeur de vitesse instantanée jusqu'à ce qu'elle atteigne soit un niveau auquel la valeur de distance minimale correspondant à la valeur de vitesse instantanée a atteint un seuil prédéterminé, soit un niveau inférieur auquel la valeur de distance minimale correspondante dépasse la valeur de distance instantanée.

3. Dispositif de régulation de servomoteur selon l'une quelconque des revendications précédentes, caractérisé en ce que ladite position instantanée est détectée par des moyens de détection comprenant un codeur rotatif associé audit servomoteur.

4. Dispositif de régulation de servomoteur selon l'une quelconque des revendications précédentes, dans lequel ladite table emmagasine des valeurs de distance minimales respectivement pour onze valeurs de vitesse discrètes différentes.

5. Imprimante doté d'un dispositif de régulation de servomoteur selon l'une quelconque des revendications précédentes, servant à réguler le déplacement d'une tête d'impression de l'imprimante.

**Patentansprüche**

1. Servomotorsteuervorrichtung mit einer Einrichtung (104), die wiederholt einen aktuellen Entfernungswert bereitstellt, der die Entfernung (S) zwischen der aktuellen Position eines Gegenstands und einer Zielposition (D) angibt, und die als Steuerung für einen Motordrehzahlwert betreibbar ist, um die Drehzahl eines Servomotors (102) entsprechend dem aktuellen Entfernungswert einzustellen und um den Gegenstand gegen die Zielposition zu bewegen, mit einem Speicher für eine Datentabelle (108), die Daten enthält, die für jeden von mehreren verschiedenen Drehzahlwerten den Minimalentfernungswert für einen Bereich von Entfernungswerten angeben, für die der betreffende Drehzahlwert geeignet ist, welche Vorrichtung während der durch den Servomotor bewirkten Bewegung des Gegenstands gegen die Zielposition so betätigbar ist, daß aus der Datentabelle derjenige Minimalentfernungswert ausgelesen wird, der dem Drehzahlwert zugeordnet ist, wobei der aktuelle Entfernungswert mit dem Minimalentfernungswert verglichen wird um zu bestimmen, ob der Drehzahlwert zu erniedrigen ist, **gekennzeichnet durch** eine Steuereinrichtung (106) zum Adressieren der Datentabelle gemäß dem aktuellen Motordrehzahlwert, um den Minimalentfernungswert jedesmal dann zu erhalten, wenn der aktuelle Entfernungswert bereit steht, und um den Vergleich des aktuellen Entfernungswertes mit dem Minimalentfernungswert jedesmal dann vorzunehmen, wenn der letztere Wert vorliegt, und durch eine Treibereinrichtung (100) für den Servomotor (102), welche die Servomotordrehzahl abhängig von abfallenden Motordrehzahlwerten verfändert, die aus wiederholten Vergleichen durch die Steuereinrichtung (106) resultieren, wobei die Steuereinrichtung (106) vor dem Aktivieren des Servomotors zum Bewegen des Gegenstands aus einer Anfangsposition (A) eine Anfangs-Drehzahl einstellt, bei der der Servomotor stationär gehalten und der aktuelle Drehzahlwert abhängig von aufeinanderfolgenden Vergleichen zwischen dem der Anfangsposition zugeordneten Anfangsentfernungswert und den entsprechend aufeinanderfolgend für größere Drehzahlwerte erhaltenen Minimalentfernungswerten inkrementiert wird, bis der aktuelle Drehzahlwert einen geeigneten Startdrehzahlwert aufweist, und wobei die Steuereinrichtung (106) danach den Servomotor aktiviert, um dessen Drehzahl bis auf einen dem Startdrehzahlwert entsprechenden Wert zu erhöhen.

2. Servomotorsteuervorrichtung gemäß Anspruch 1, **dadurch gekennzeichnet**, daß die Steuereinrichtung während der anfänglichen Drehzahleinstellung den Startdrehzahlwert durch Inkrementieren des aktuellen Drehzahlwerts erreicht, bis dieser entweder eine Größe erreicht, bei der der dem aktuellen Drehzahlwert entsprechende Minimalentfernungswert einen vorgegebenen Schwellenwert oder eine niedrigere Größe erreicht, bei der der zugehörige Minimalentfernungswert den aktuellen Entfernungswert überschreitet.

3. Servomotorsteuervorrichtung nach einem der vorstehenden Ansprüche, **dadurch gekennzeichnet**, daß die aktuelle Position durch eine Detektoreinrichtung mit einem dem Servomotor zugeordneten Winkelkodierer feststellbar ist.

4. Servomotorsteuervorrichtung nach einem der vorstehenden Ansprüche, bei dem Minimalentfernungswerte für jeden von elf verschiedenen diskreten Drehzahlwerten in der Tabelle gespeichert sind.

5. Drucker mit einer Servomotorsteuervorrichtung nach einem der vorstehenden Ansprüche zum Steuern der Bewegung eines Druckerkopfs.

## FIG.1

MOTOR SPEED

POSITION

a　　b　　　　　　　　　c　　d

## FIG. 2

INSTRUCTED SPEED

POSITION

A　　B　　　　　　　　　C　　D

| S | 0 | 1 | 2 | 3 | 4 | 5 | 6 | 7 | 8 | 9 | 10 | 11 | 12 | 13 |
|---|---|---|---|---|---|---|---|---|---|---|----|----|----|----|
| V | 0 | 2 | 3 | 3 | 4 | 4 | 5 | 5 | 6 | 6 | 6  | 7  | 7  | 7  |

| S | 14 | 15 | 16 | 17 | 18 | 19 | 20 | 21 | 22 | 23 | — | — | — | — |
|---|----|----|----|----|----|----|----|----|----|----|---|---|---|---|
| V | 7  | 8  | 8  | 8  | 8  | 9  | 9  | 9  | 9  | 10 | — | — | — | — |

## FIG.3

FIG. 4

| SPEED | 10 | 9 | 8 | 7 | 6 | 5 | 4 | 3 | 2 | 1 | 0 |
|---|---|---|---|---|---|---|---|---|---|---|---|
| MINIMUM DISTANCE | 23 | 19 | 16 | 11 | 8 | 6 | 4 | 2 | 1 | 0 | 0 |

FIG. 5

FIG. 6

# FIG . 7

"0" → "SPEED"

"SPEED" + 1 → "SPEED"

"MINIMUM" "DISTANCE" IS READ OUT FROM THE CORRESPONDING MEMORY AREA

"MINIMUM DISTANCE" ≧ 23?  — NO

YES

"MINIMUM DISTANCE" ≧ CURRENT DISTANCE?  — NO

YES

# FIG. 8

"MINIMUM" "DISTANCE" IS READ OUT FROM THE CORRESPONDING MEMORY AREA

"MINIMUM DISTANCE" > CURRENT DISTANCE?  — NO

YES

"SPEED" −1 → "SPEED"